# EUROPÄISCHE PATENTSCHRIFT

(11) **EP 0 874 682 B1**
(45) Veröffentlichungstag und Bekanntmachung des Hinweises auf die Patenterteilung: **26.04.2000**
(21) Anmeldenummer: 96943102.2
(22) Anmeldetag: 12.12.1996
(51) Int. Cl.: B01D 61/06, B01D 61/10, C02F 1/44, F15B 3/00

(54) **VERFAHREN ZUM ENTSALZEN VON WASSER UND VORRICHTUNG ZUR DURCHFÜHRUNG DES VERFAHRENS**
PROCESS FOR DESALINATING WATER AND A SUITABLE DEVICE
PROCEDE DE DESSALEMENT D'EAU ET DISPOSITIF CORRESPONDANT

(30) Priorität: 13.12.1995 DE 19546587
(43) Veröffentlichungstag der Anmeldung: 04.11.1998
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: EP9605573
(87) Internationale Veröffentlichungsnummer: WO9721483

(56) Entgegenhaltungen:
- EP-A- 0 055 981
- DE-A- 3 101 694
- US-A- 3 825 122
- US-A- 4 645 599
- US-A- 4 756 830
- US-A- 4 913 809
- PATENT ABSTRACTS OF JAPAN vol. 011, no. 176 (C-426), 5.Juni 1987 & JP 62 001407 A (KIICHI TAGA), 7.Januar 1987, & DATABASE WPI Week 8707 Derwent Publications Ltd., London, GB; AN 87-045409

## Beschreibung

Die Erfindung betrifft ein Verfahren zum Entsalzen von Wasser gemäß dem Oberbegriff von Anspruch 1, sowie eine Vorrichtung zur Durchführung des Verfahrens.

Die Umkehrosmose leistet einen wichtigen Beitrag zur Versorgung der Menschheit mit sauberem Trinkwasser. Sie ist immer da einsetzbar, wo Meerwasser hinreichend zur Verfügung steht und zur Trinkwassergewinnung herangezogen werden kann. Beispiele hierfür sind die grundwasserarmen Länder des arabischen Raumes, die Zugang zum Meer haben, sowie seegehende Schiffe. Mittlerweile ist es sogar möglich, auf kleineren Yachten die Trinkwasserversorgung mit Entsalzungsanlagen sicherzustellen, die auf der Grundlage der Umkehrosmose arbeiten.

Das Verfahren der Umkehrosmose als physikalisch-chemisches Prinzip ist bekannt. Es wird dabei salzhaltiges Wasser unter Druck gegen eine Seite einer semipermeablen Membran (im folgenden kurz "Membran" genannt) geführt, wodurch erreichtwird, daß bei geeigneter Wahl des Drucks die Wassermoleküle in die Membran ein-, durch sie hindurch- und auf der gegenüberliegenden Seite wieder austreten. Die Membran muß so geartet sein, daß nur die Wassermoleküle, nicht jedoch die die gelösten Salze bildenden Ionen (Na ⁺, K⁺, Cl⁻, SO₄²⁻ u.a.) zu diesem Durchtritt befähigt sind. Unter diesen Voraussetzungen erhält man auf der Austrittsseite der Membran entsalztes, gereinigtes und auch entkeimtes Wasser, das für den menschlichen Genuß geeignet ist.

Bei der praktischen Anwendung der Umkehrosmose arbeiten bekannte Verfahren kontinuierlich und im Durchfluß, d. h. die Membran wird in ein druckdichtes Membranmodul eingebaut und dort mit dem zu entsalzenden Wasser angeströmt. Dabei scheidet sich auf der Austrittsseite der Membran entsalztes, im wesentlichen druckfreies Wasser ab. Der nicht durch die Membran tretende Teil des Wasser verläßt das Membranmodul entsprechend höher konzentriert und steht dabei unter dem Betriebsdruck des Systems.

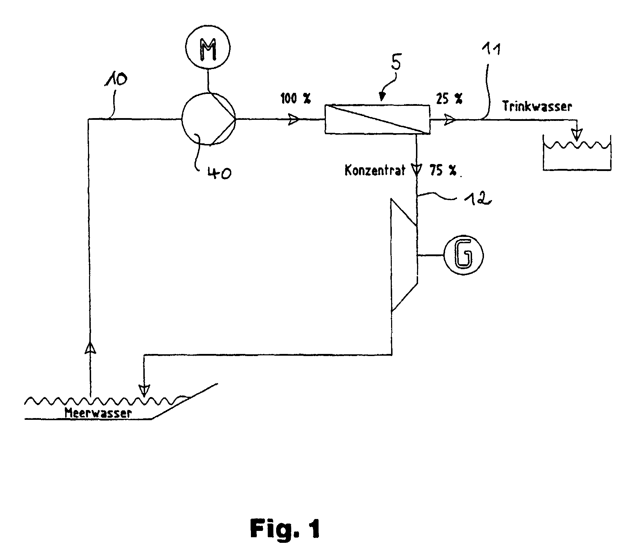

Eine bekannte Anlage zur Meerwasserentsalzung mit der Umkehrosmose ist in Fig. 1 dargestellt. Meerwasser 10 wird von einer Hochdruckpumpe 40 angesaugt und auf einen Arbeitsdruck von ca. 65 bar gebracht und anschließend in ein Membranmodul 5 eingeleitet. Etwa 25 % des Meerwassers tritt durch die Membran und verläßt das Membranmodul 5 als Trinkwasser, wogegen 75 % das Modul als Konzentrat verlassen.

Die in Fig. 1 dargestellte Anlage weist einen Nachteil auf, der allen bekannten Verfahren zur Meerwasserentsalzung anhaftet. Das salzhaltige Meerwasser wird von der Hochdruckpumpe gefördert, die somit Korrosionseinflüssen unterworfen ist. Alle mit dem Salzwasser in Berührung kommenden Teile der Hochdruckpumpe müssen deshalb aus korrosionsbeständigem Stahl hergestellt sein, was zu sehr aufwendigen und teueren Konstruktionen, sowie zu verminderter Lebensdauer der Pumpe und damit auch zu erhöhten Wartungskosten führt.

Daneben haben die bekannten Anlagen und Verfahren durchwegs einen sehr niedrigen Wirkungsgrad. Dies ist nicht nur auf die Energieverluste beim Durchtritt durch die Membran zurückzuführen, sondern auch besonders darauf, daß nur ein kleiner Teil des zugeführten Salzwassers (wie erwähnt ca. 25 %) durch die Membran hindurchtritt, der Rest verläßt das Membranmodul als Konzentrat. Damit bleibt die Energie ungenutzt, die bei der Druckbeaufschlagung anteilsmäßig für das Konzentrat aufgebracht wurde (diese Energie ergibt sich aus dem Produkt von Druck und Volumen, pV). Würde man das Konzentrat unter Druckentlastung ins Freie entlassen, so ergäbe sich ein Energieverlust von 75 %.

Zur Verbesserung der Energiebilanz wurden Verfahren vorgeschlagen, bei denen das Konzentrat nicht ins Freie entlassen, sondern dessen Energie teilweise rückgewonnen wird. Beim Verfahren von Fig. 1 wird das Konzentrat zu einer Energierückführturbine G geleitet, die nach dem Prinzip des Wasserkraftwerkes arbeitet, d.h. die Energie wird als Rotationsenergie auf eine Welle übertragen, auf der z. B. ein Stromgenerator sitzt.

Da bei dieser Art der Energierückführung gleichzeitig eine Umwandlung von einer Energieform in eine andere erfolgt, treten die bei solchen Prozessen unvermeidlichen Verlustleistungen auf, so daß der energetische Gesamtwirkungsgrad einer solchen Anlage (unter Einrechnung aller anderen Verlustleistungen) typischerweise nicht mehr als 27 % beträgt.

Eine weitere Anlage ist aus der US 4 645 599 bekannt. Diese Anlage zeigt eine Vierkammeranordnung, bei der ein mit zwei Kammern versehener Behälter mit einer seiner Kammern mit einem weiteren Behälter verbunden ist, welcher ebenfalls zwei Kammern aufweist, von denen wiederum eine mit einer Kammer eines weiteren, zwei Kammern aufweisenden Behälters verbunden ist. Bei dieser Anlage ist eine Vielzahl von Ventilen und Leitungen notwendig, um die Wasserentsalzung durchzuführen.

Eine weitere Anlage ist aus der DE 3 101 694 bekannt. Diese Druckschrift zeigt eine Osmoseanlage mit einem Druckumsetzer, welcher eine Zulaufkammer zur Aufnahme des salzhaltigen Wassers aufweist. Weiterhin weist diese Anlage noch eine zusätzliche, als Kompressionskammer dienende Kammer auf, in die das Konzentrat über eine Leitung eingeleitet wird. Das bedeutet, daß bei dieser Anlage die Kammer des Druckumsetzers gleichzeitig Rücklaufkammer und Kompressionskammer ist. Bei diesem bekannten Verfahren, welches diskontinuierlich ist, wird das salzhaltige Wasser in die Zulaufkammer des Druckumsetzers unter Druck zugeführt.

Eine weitere bekannte Anlage ist in der US 3 825 122 gezeigt. Diese Druckschrift zeigt eine Zulaufkammer zur Aufnahme des salzhaltigen Wassers, eine mit Druckmedium gefüllte Kompressionskammer zum Anlegen des äußeren Drucks und eine Rücklaufkammer zur Aufnahme des rückgeführten konzentrierten Wassers, wobei die drei Kammern über Druckausgleichselemente miteinander in Verbindung stehen. Die Kammern der Anordnung sind durch die Druckausgleichselemente zweigeteilt. Das bedeutet, daß gemäß dieser Druckschrift in einem ersten Verfahrensschritt das salzhaltige Wasser im wesentlich überdruckfrei in die Zulaufkammer geführt wird und dabei die Rücklaufkammer durch die Wirkung der Druckausgleichselemente entleert; gleichzeitig jedoch die Zulaufkammer durch Anlegen des äußeren Drucks an das Druckmedium der Kompressionskammer unter Druck entleert und weiterhin bei einem zweiten Verfahrensschritt nicht nur die Rücklaufkammer mit Konzentrat gefüllt sondern gleichzeitig auch entleert wird. Es handelt sich im Grunde bei dieser bekannten Vorrichtung um eine Sechskammeranordnung, bei der die einzelnen Kammern durch starre Wände voneinander getrennt sind und ihre Größe in ihrer Gesamtheit jeweils nicht verändern.

Eine weitere Anlage ist aus der US 4 913 809 bekannt. Diese Druckschrift zeigt eine Vierkammeranordnung, die eine Zulaufkammer zur Aufnahme des salzhaltigen Wassers, zwei mit Druckmedium gefüllte Kompressionskammer zum Anlegen des äußeren Drucks und eine Rücklaufkammer zur Aufnahme des rückgeführten konzentrierten Wassers aufweist. Bei dieser bekannten Anlage wird der äußere Druck auf das Volumen des Konzentrats direkt auf das Druckausgleichselement zwischen der zweiten mit Druckmedium gefüllten Kompressionskammer und der Zulaufkammer übertragen.

Weitere bekannte Anlagen zur Wasserentsalzung nach dem Verfahren der umgekehrten Osmose zeigen die Druckschriften JP 62 001 407 A und EP 0 055 981.

Den nächstkommenden Stand der Technik zeigt die US 4 756 830. Diese Druckschrift offenbart ein Verfahren zum Entsalzen von Wasser mit der Umkehrosmose, bei dem druckbeaufschlagtes salzhaltiges Wasser in ein Membranmodul eingeleitet wird und entsalztes, durch das Membransystem des Membranmoduls getretenes Wasser und konzentriertes, nicht durch das Membransystem getretenes und unter Druck stehendes Wasser gewonnen wird. Die Druckbeaufschlagung des salzhaltigen Wassers erfolgt bei diesem System des Standes der Technik durch Anlegen eines äußeren Drucks an ein Druckmedium, dessen Druck auf das salzhaltige Wasser übertragen wird. Im Verfahren gemäß dieser Druckschrift wird das konzentrierte, unter Druck stehende Wasser rückgeführt und der äußere Druck auf sein Volumen und auf das Druckmedium übertragen. In diesem bekannten Verfahren wird in einer diskontinuierlichen Verfahrensführung mit Hilfe einer Zwei+Zwei-Kammeranordnung, die jeweils eine Zulaufkammer zur Aufnahme des salzhaltigen Wassers und eine mit Druckmedium gefüllte Kompressionskammer zum Anlegen des äußeren Drucks bzw. eine Rücklaufkammer zur Aufnahme des rückgeführten, konzentrierten Wassers und eine mit Druckmedium gefüllte Kompressionskammer aufweisen, die Osmose durchgeführt. Bei dieser bekannten Anordnung sind jeweils die das Druckmedium enthaltenen Kammern über ein Ventil voneinander getrennt. Die das Druckmedium enthaltenen Kammern stehen in Verbindung miteinander, wenn dieses Ventil geöffnet wird. Geschieht dies, so wird in einem ersten Verfahrensschritt das salzhaltige Wasser in die Zulaufkammer geführt und dabei die Rücklaufkammer durch Wirkung des Druckmediums entleert und bei einem zweiten Verfahrensschritt der äußere Druck an das Druckmedium der Kompressionskammern angelegt und somit das erzeugte konzentrierte Wasser zur Rücklaufkammer geführt.

Nachteilig bei diesem bekannten Verfahren zum Entsalzen von Wasser ist es, daß es kompliziert aufgebaut ist, das heißt, daß zahlreiche Kammern, Ventile und Leitungen zur Durchführung des Verfahrens notwendig sind.

Aufgabe der Erfindung ist es, ein Verfahren und eine Vorrichtung zum Entsalzen von Wasser mit der Umkehrosmose zur Verfügung zu stellen, welches sich gegenüber dem Stand der Technik dadurch auszeichnet, daß es einfach aufgebaut ist und mit möglichst wenig Leitungen, Ventilen und Kammern arbeitet.

Diese Aufgabe wird erfindungsgemäß durch ein Verfahren gemäß Anspruch 1 und durch eine Vorrichtung gemäß Anspruch 2 gelöst.

Die Vorteile der Erfindung liegen insbesondere darin, daß die Zulaufkammer und die Rücklaufkammer innerhalb einer Kammer, nämlich der Kompressionskammer, angeordnet sind. Auf diese Art und Weise ist es möglich, daß sich das Volumen der Zulaufkammer in direkter, d.h. durch Verschieben der Druckausgleichselemente bewirkter Abhängigkeit des Volumen der Rücklaufkammer ändert. Indem sich sowohl Zulaufkammer als auch Rücklaufkammer innerhalb einer Kammer befinden, lassen sich eine Vielzahl von Kammern, Ventilen und Leitungen einsparen und somit die Sicherheit, Zuverlässigkeit und Wartungsfreundlichkeit der Anlage vorteilhaft gegenüber dem Stand der Technik erhöhen. Darüber hinaus ist eine solch einfach aufgebaute Anlage auch wesentlich einfacher und somit kostengünstiger herzustellen.

Bei einem Verfahren der eingangs erwähnten Art erfolgt die Druckbeaufschlagung des salzhaltigen Wassers durch Anlegen eines äußeren Drucks an ein Druckmedium, dessen Druck auf das salzhaltige Wasser übertragen wird. Dadurch fördert die Hochdruckpumpe kein Salzwasser, sondern lediglich das Druckmedium, welches so gewählt werden kann, daß keine Korrosionsprobleme auftreten. Bevorzugt ist die Verwendung von Wasser (insbesondere von destilliertem Wasser) als Druckmedium, womit alle Korrosionsprobleme vermieden werden und der Einbau relativ kostengünstiger Hochdruckpumpen möglich ist. Insbesondere müssen die mit dem Druckmedium in Berührung kommenden Teile der Pumpe nicht mehr aus korrosionsbeständigem Stahl hergestellt sein.

Bei dem Verfahren wird das konzentrierte, unter Druck stehende Wasser im Verfahren rückgeführt und der äußere Druck auf sein Volumen und auf das Druckmedium übertragen. Dies geht von dem Gedanken aus, die im Konzentrat gespeicherte Energie nicht in eine andere Energieform umzuwandeln, sondern sie in der Form, in der sie gespeichert ist, in den Prozeß zurückzuführen. Durch diese Art der Energierückführung entstehen keine Umwandlungsverluste, und es ergibt sich ein wesentlich besserer Wirkungsgrad. Außerdem geht durch die Rückführung des Konzentrats dessen Volumen im Verfahren nicht verloren, was zur Folge hat, daß die Hochdruckpumpe weniger Arbeit aufbringen muß. Dies ergibt eine Verbesserung des energetischen Wirkungsgrads, der beim erfindungsgemäßen Verfahren Werte von 45 % bis zu 50 % erreichen kann.

Die Rückführung des konzentrierten, unter Druck stehenden Wassers (d.h. des Konzentrats) erfolgt bei diskontinuierlicher Verfahrensführung mit mindestens zwei Verfahrensschritten, wobei beim ersten Verfahrensschritt das salzhaltige Wasser zum Ort der Druckbeaufschlagung geführt und das beim vorherigen Verfahrenszyklus rückgeführte konzentrierte Wasser aus dem Verfahren entfernt und beim zweiten Verfahrensschritt der äußere Druck an das Druckmedium angelegt wird, das salzhaltige Wasser in das Membranmodul eingeleitet und das gewonnene konzentrierte Wasser unter Druck rückgeführt wird.

Die Rückführung wird unter Einsatz einer Dreikammeranordnung durchgeführt, die eine Zulaufkammer zur Aufnahme des salzhaltigen Wassers, eine mit dem Druckmedium gefüllte Kompressionskammer zum Anlegen des äußeren Drucks und eine Rücklaufkammer zur Aufnahme des rückgeführten konzentrierten Wassers aufweist, wobei die drei Kammern über Druckausgleichselemente so miteinander in Verbindung stehen, daß ein möglichst verlustfreier hydraulischer und/oder pneumatischer Druckausgleich ohne wesentliche Vermischung von deren Inhalt möglich ist.

Bei Einsatz dieses Dreikammersystems wird im ersten Verfahrensschritt das salzhaltige Wasser im wesentlichen überdruckfrei in die Zulaufkammer geleitet. Dieser Füllvorgang führt zu einem geringen Druckaufbau in der Zulaufkammer, wobei dieser Druck über die Druckausgleichselemente sowohl auf die Kompressionskammer, als auch auf die Rücklaufkammer übertragen wird. Bei diesem Verfahrensschritt befindet sich vom vorangegangenen Verfahrenszyklus her noch das Konzentrat in der Rücklaufkammer, außerdem ist die Kompressionskammer zur Außenatmosphäre hin geschlossen, die Rücklaufkammer jedoch geöffnet. Dies führt dazu, daß durch den Druckaufbau im System die Rücklaufkammer entleert wird.

Beim zweiten Verfahrensschritt (bei dem die Rücklaufkammer gegenüber der Außenatmosphäre abgeschlossen ist) wird ein zur Durchführung der Umkehrosmose ausreichender Druck an das Druckmedium der Kompressionskammer angelegt, der sich über die Druckausgleichselemente auf die Zulaufkammer auswirkt und das dort befindliche salzhaltige Wasser mit Druck beaufschlagt. Dadurch wird die Umkehrosmose eingeleitet. Zur Unterstützung des Transports des salzhaltigen Wassers von der Zulaufkammer zum Membranmodul kann zwischen diesen Verfahrenstationen eine zusätzliche Förderpumpe vorgesehen sein, die den für die Umkehrosmose erforderlichen Arbeitsdruck um wenige bar beaufschlagt.

Da der Anteil des gewonnenen entsalzten Wassers aus dem System abgeführt wird, muß der dadurch entstehende Volumenverlust ausgeglichen werden. Dies erfolgt dadurch, daß die Hochdruckpumpe weiter Druckmedium in die Kompressionskammer fördert. Kein Volumenverlust entsteht jedoch durch das Konzentrat, weil dessen Volumen zur Rücklaufkammer rückgeführt wird, so daß die Hochdruckpumpe wie erwähnt entsprechend weniger Arbeit aufbringen muß.

Als Druckmedien können grundsätzlich Flüssigkeiten oder Gase verwendet werden, wobei jedoch Flüssigkeiten aufgrund ihrer fehlenden Kompressibilität besonders bevorzugt sind.

Bei einer bevorzugten Ausführungsform der Erfindung werden als Druckausgleichselemente Druckmembranen eingesetzt. Diese sind gegenüber Wasser und dem Druckmedium impermeabel. Solche Druckmembranen sind bekannt und finden z.B. in Druckausgleichsbehältern von geschlossenen Warmwasserheizungen Verwendung.

Bevorzugt werden als Druckausgleichselemente jedoch Kolben eingesetzt, die in einem Zylinder frei und möglichst ohne Reibung bewegbar sind. Bei dieser Ausführungsform sind die Kammern des Dreikammersystems zylinderartig gestaltet, um diese Bewegung zu ermöglichen. Beim praktischen Einsatz hat sich überraschenderweise gezeigt, daß solche Kolben nicht unbedingt mit besonderen Dichtelementen (wie z.B. Dichtlippen) versehen sein müssen, weil ein Austausch zwischen der Kammern der Dreikammeranordnung (d.h. eine Vermischung von deren Inhalt) in gewissem Umfang hinnehmbar ist. Dies gilt insbesondere dann, wenn das Druckmedium eine Flüssigkeit ist.

Selbstverständlich können Kolben und Druckmembranen wahlweise nebeneinander eingesetzt werden.

Bei der erfindungsgemäßen Unterbringung der Kammern in einem druckdichten Behälter (Einbehälter-Anordnung) hat dieser je einen Anschluß für den Zulauf, den Rücklauf und die Hochdruckpumpe. Der druckdichte Behälter selbst bildet die Kompressionskammer. In seinem Inneren sind die Zulaufkammer und die Rücklaufkammer untergebracht und haben jeweils die Gestalt einer flexiblen blasenartigen Druckmembran, die druckdicht mit der Kompressionskammer verbunden ist. Da die blasenartigen Druckmembranen im Inneren der Kompressionskammer ihre äußere Gestalt verändern können, nehmen Sie jeden Raum ein, der Ihnen nach Maßgabe der herrschenden Druckverhältnisse angeboten wird und wirken so als Druckausgleichselement.

Der Raum zwischen den blasenartigen Druckmembranen im Inneren der Kompressionskammer ist mit dem Druckmedium gefüllt, welches von der Hochdruckpumpe in die Kompressionskammer hinein gefördert werden kann, so daß diese mit Druck beaufschlagbar ist. Durch die Druckausgleichsfunktion der blasenartigen Druckmembranen wirkt dieser Druck auch auf den Innendruck der Zulaufkammer und der Rücklaufkammer, so daß zwischen den drei Kammern ein vollständiger Druckausgleich erfolgt.

Die flexiblen Druckmembranen haben im Querschnitt etwa die Gestalt einer Sichel und sind entlang ihrer Umfangsränder fest in dem jeweiligen Druckbehälter verankert. Da sie flexibel sind, können sie mit ihrer sichelförmigen Gestalt von einer Seite des Behälters zur anderen Seite "umklappen" und wirken so als Druckausgleichselemente. Durch diese Anordnung ist ebenfalls ein idealer Druckausgleich zwischen den drei Kammern gewährleistet, d. h. an jedem Ort des Dreikammersystems herrscht (abgesehen von Leitungsverlusten) der gleiche Druck.

Es wurde schon darauf hingewiesen, daß die Hochdruckpumpe beim erfindungsgemäßen Verfahren unter Rückführung des Konzentrats nur das Volumen des abgeführten entsalzten Wassers ausgleichen muß, so daß sie gegenüber den Hochdruckpumpen bekannter Verfahren wesentlich kleiner dimensioniert sein kann. Ein weiterer Vorteil gegenüber einer bekannten Wasserentsalzungsanlage gemäß Fig. 1 besteht im Wegfall der aufwendigen Energierückführungsturbine G, die durch das relativ einfache Dreikammersystem ersetzt wird und die Anlagekosten auch unter diesem Gesichtspunkt verringert.

Der für die Umkehrosmose erforderliche Arbeitsdruck richtet sich nach dem Salzgehalt des zu entsalzenden Wassers und wird im übrigen durch die Eigenschaften der semipermeablen Membran bestimmt. Als Faustwert gilt, daß der Arbeitsdruck etwa das zweieinhalbfache des osmotischen Drucks der Salzlösung sein soll. Da der osmotische Druck von Salzwasser (gemessen gegen destilliertes Wasser als Referenz) 26,5 bar beträgt, hat dieser Mindestdruck bei der Meerwasserentsalzung den Wert von etwa 66,3 bar. Auf dieser Grundlage kann abgeschätzt werden, daß der Arbeitsdruck der Umkehrosmose - je nach Eigenschaften der semipermeablen Membran im Einzelfall - etwa im Bereich von 40 bis 140 bar liegen muß.

Weitere bevorzugte Ausführungsformen sind in den Unteransprüchen angegeben.

Weitere Merkmale und Anwendungsmöglichkeiten der Erfindung ergeben sich aus der nachfolgenden Beschreibung von bevorzugten Ausführungsformen unter Bezugnahme auf die Zeichnung; es zeigen:
- Fig. 1:: eine Wasserentsalzungsanlage nach dem Stand der Technik mit einer Energierückführturbine;
- Fig. 2:: eine Anlage zur Durchführung des erfindungsgemäßen Verfahrens mit einer erfindungsgemäßen Dreikammeranordnung, die in einem Behälter untergebracht ist;

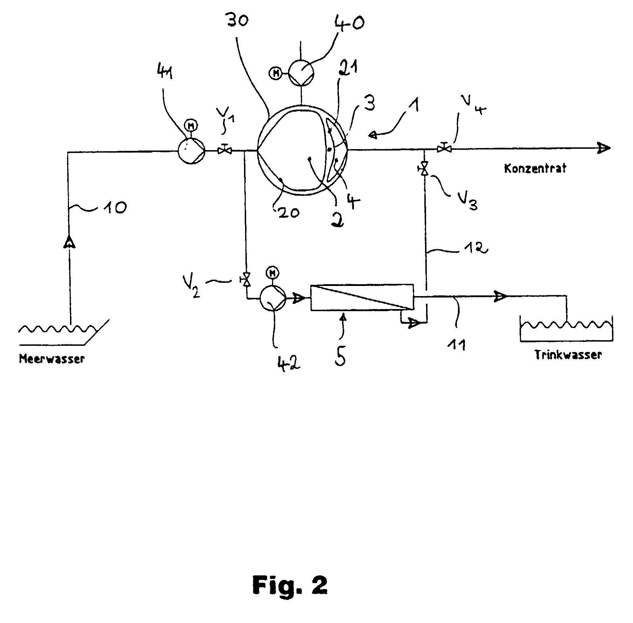

Fig. 2 zeigt eine Anlage zur Durchführung des erfindungsgemäßen Verfahrens zum Entsalzen von Wasser mit einer Dreikammeranordnung 1, welches in einem einzigen druckdichten Behälter 30 untergebracht ist. Der Behälter 30 selbst bildet die Kompressionskammer 3 und enthält in seinem Inneren zwei blasenanrtige Druckmembranen 20, 21, die druckdicht mit der Kompressionskammer verbunden sind und die Zulaufkammer 2 bzw. die Rücklaufkammer 4 bilden. In der dargestellten Verfahrensphase ist die Blase der Zulaufkammer völlig gefüllt und aufgebläht, die Blase der Rücklaufkammer dagegen praktisch entleert und zusammenfaltet. Der zwischen der Zulaufkammer 2 und der Rücklaufkammer 4 liegende Innenraum des Behälters 30 bildet die Kompressionskammer 3 und ist mit einem Druckmedium gefüllt. Zur Zuführung dieses Druckmediums zum Zweck der Druckbeaufschlagung der Kompressionskammer 3 dient eine Hochdruckpumpe 40.

Im einzelnen läuft das Verfahren unter Rückführung des entsalzten Wassers wie folgt ab:

Zu Beginn werden die Ventile V2 und V3 geschlossen und die Ventile V1 und V4 geöffnet.

Dann wird über eine Füllpumpe 41 (die typischerweise eine Druckleistung von etwa 1 bar haben muß) Salzwasser 10 über das geöffnete Ventil V1 in die Zulaufkammer 2 gepumpt. Dieser Pumpvorgang erfolgt im wesentlichen überdruckfrei, d. h. es ist nur der Druck erforderlich, der zum Transport des Salzwassers 10 benötigt wird. Beim Einpumpen bläht sich die Blase der Zulaufkammer 2 auf und wirkt dabei als Druckausgleichselement gegenüber dem Innenraum der Kompressionskammer 3 und der Blase der Rücklaufkammer 4. Gleichzeitig wird aus der Blase der Rücklaufkammer 4 über das geöffnete Ventil V4 das Konzentrat 12 ausgestoßen, das beim vorangegangenen Verfahrenszyklus dorthin rückgeführt wurde. Anschließend werden die Ventile V1 und V4 geschlossen und die Ventile V2 und V3 geöffnet, womit der erste Verfahrensschritt abgeschlossen ist.

Beim zweiten Verfahrensschritt wird die Hochdruckpumpe 40 in Gang gesetzt, die durch Fördern von Druckmedium in die Kompressionskammer 3 diese auf den für die Umkehrosmose erforderlichen Arbeitsdruck bringt, der bei der gezeigten Anlage etwa 64 bar beträgt. Der Druck in der Kompressionskammer wird auf den Inhalt der Zulaufkammer 2 übertragen, weil die blasenartige Druckmembran 20 als Druckausgleichselement wirkt. Damit wird die Umkehrosmose eingeleitet. Zur Unterstützung der Förderung des Salzwassers 10 von der Zulaufkammer 2 zum Membranmodul 5 wird eine zusätzliche Umwälzpumpe 42 zugeschaltet, die im gezeigten Beispiel eine Druckleistung von etwa 2 bar hat.

Der Volumenanteil des entstehenden entsalzten Wassers (etwa 25 %) wird in einem mit "Trinkwasser" bezeichneten Tank aufgefangen und so aus dem System entfernt. Dieser Volumenverlust muß von der Hochdruckpumpe 40 nachgeliefert werden, die zu diesem Zweck weiter das Druckmedium in die Kompressionskammer 3 einpumpt und den Systemdruck konstant auf etwa 64 bar hält. Gleichzeitig wird Konzentrat 12 über das geöffnete Ventil V3 in die Rücklaufkammer 4 rückgeführt. Die Hochdruckpumpe 40 muß diesen Volumenanteil also nicht ausgleichen und leistet entsprechend weniger Arbeit. Am Ende des zweiten Verfahrensschrittes ist die Blase der Zulaufkammer 2 zusammengefaltet und damit im wesentlichen entleert, wogegen die Blase der Rücklaufkammer 4 aufgebläht ist. Ihr Volumen entspricht dann demjenigen des rückgeführten Konzentrat 12, und das Druckmedium in der Kompressionskammer 3 nimmt ein Volumen ein, das demjenigen des entsalzten Wassers 11 entspricht, welches aus dem System entfernt wurde.

### Bezugszeichenliste

- 1: Dreikammeranordnung
- 2: Zulaufkammer
- 3: Kompressionskammer
- 4: Rücklaufkammer
- 5: Membranmodul

- 10: Salzwasser
- 11: entsalztes Wasser
- 12: konzentriertes Wasser

- 20, 21: blasenartige Druckmembran

- 30: Behälter

- 40: Hochdruckpumpe
- 41: Füllpumpe
- 42: Umwälzpumpe
- V₁ - V₄: Ventile

## Patentansprüche

1. Verfahren zum Entsalzen von Wasser mit der Umkehrosmose, insbesondere zum Entsalzen von Meerwasser, bei dem druckbeaufschlagtes salzhaltiges Wasser (10) in ein Membranmodul (5) eingeleitet wird und entsalztes, durch das Membransystem des Membranmoduls (5) getretenes Wasser (11) und konzentriertes, nicht durch das Membransystem getretenes und unter Druck stehendes Wasser (12) gewonnen wird,
die Druckbeaufschlagung des salzhaltigen Wassers (10) durch Anlegen eines äußeren Drucks an ein Druckmedium erfolgt, dessen Druck auf das salzhaltige Wasser (10) übertragen wird,
das konzentrierte, unter Druck stehende Wasser (12) im Verfahren rückgeführt und der äußere Druck auf sein Volumen und auf das Druckmedium übertragen wird, in einer diskontinuierlichen Verfahrensführung mit mindestens zwei Verfahrensschritten mit Hilfe einer Dreikammeranordnung (1), die eine Zulaufkammer (2) zur Aufnahme des salzhaltigen Wassers (10), eine mit Druckmedium gefüllte Kompressionskammer (3) zum Anlegen des äußeren Drucks und eine Rücklaufkammer (4) zur Aufnahme des rückgeführten konzentrierten Wassers (12) aufweist, wobei die drei Kammern (2, 3, 4) über Druckausgleichselemente (20, 21) miteinander in Verbindung stehen,
(a) bei einem ersten Verfahrensschritt das salzhaltige Wasser (10) im wesentlichen überdruckfrei in die Zulaufkammer (2) geführt und dabei die Rücklaufkammer (4) durch die Wirkung der Druckausgleichselemente (20, 21) entleert wird, und
(b) bei einem zweiten Verfahrensschritt der äußere Druck auf das Druckmedium der Kompressionskammer (3) angelegt und das gewonnene konzentrierte Wasser (12) zur Rücklaufkammer (4) geleitet wird,
dadurch gekennzeichnet, daß die Kompressionskammer (3) durch einen druckdichten Behälter (30) gebildet wird,
die Zulaufkammer (2) und die Rücklaufkammer (4) innerhalb der Kompressionskammer (3) angeordnet sind und
die drei Kammern (2, 3, 4) über Druckausgleichselemente (20, 21) direkt miteinander in Verbindung stehen, so daß sich das Volumen der Zulaufkammer (2) in direkter, durch Verschieben der Druckausgleichselemente (20, 21) bewirkter Abhängigkeit des Volumens der Rücklaufkammer (4) ändert.

2. Vorrichtung zur Durchführung des Verfahrens nach Anspruch 1,
mit einer Dreikammeranordnung (1) mit einer Zulaufkammer (2) zur Aufnahme von salzhaltigem Wasser (10), einer Rücklaufkammer (4) zur Aufnahme von konzentriertem Wasser (11) und einer Kompressionskammer (3), die mit einem von außen zuführbaren Druckmedium mit Druck beaufschlagbar ist, wobei
die drei Kammern (2, 3, 4) über Druckausgleichselemente (20, 21) so miteinander in Verbindung stehen, daß zwischen ihnen ein hydraulischer und/oder pneumatischer Druckausgleich ohne wesentliche Vermischung ihrer Inhalte möglich ist, dadurch gekennzeichnet, daß die Kompressionskammer (3) durch einen druckdichten Behälter (30) gebildet wird,
die Zulaufkammer (2) und die Rücklaufkammer (4) innerhalb der Kompressionskammer (3) angeordnet sind, und
daß das Volumen der Zulaufkammer (2) in direkter, durch Verschieben der Druckausgleichselemente (20, 21) bewirkter Abhängigkeit des Volumens der Rücklaufkammer (4) änderbar ist.

3. Vorrichtung nach Anspruch 2,
dadurch gekennzeichnet, daß die Druckausgleichselemente ganz oder teilweise als für Wasser und das Druckmedium impermeable Druckmembranen (20, 21) gestaltet sind.

4. Vorrichtung nach Anspruch 3,
dadurch gekennzeichnet, daß der druckdichte Behälter eine Einrichtung zum Anschluß einer zur Zuführung des Druckmediums dienenden Hochdruckpumpe (40) aufweist.

5. Vorrichtung nach dem vorstehenden Anspruch,
dadurch gekennzeichnet, daß die Zulaufkammer (2) und die Rücklaufkammer (4) jeweils von einer zugleich als Druckausgleichselement wirkenden blasenartigen Druckmembran (20, 21) gebildet werden, die druckdicht mit der Kompressionskammer (3) verbunden sind.

6. Vorrichtung nach dem vorstehenden Anspruch,
dadurch gekennzeichnet, daß die Druckausgleichselemente ganz oder teilweise als Kolben gestaltet sind, die in einem zylinderartigen Behälter der Dreikammeranordnung (1) beweglich sind.

7. Vorrichtung nach dem vorstehenden Anspruch,
dadurch gekennzeichnet, daß mindestens einer der Kolben mit einer aus dem zylinderartigen Behälter herausgeführten Kolbenstange verbunden ist, wobei die Kolbenstange einen Antrieb zum Bewegen des Kolbens aufweist, bevorzugt einen Linearantrieb.

## Claims

1. Process for desalinating water by reverse osmosis, particularly for desalinating sea water, in which pressurized saline water (10) is led into a membrane module (5), and desalinated water (11) which has passed through the membrane system of the membrane module (5) and concentrated water (12) which has not passed through the membrane system and is under pressure is obtained,
the pressurization of the saline water (10) is effected by application of an external pressure to a pressure medium, the pressure of which is transmitted to the saline water (10),
the concentrated water (12) under pressure is returned to the process and the external pressure is transmitted to its volume and to the pressure medium, in a discontinuous process procedure with at least two process steps using a three-chamber arrangement (1) having an inlet chamber (2) for receiving the saline water (10), a compression chamber (3), filled with pressure medium, for the application of the external pressure and a return chamber (4) for receiving the returned concentrated water (12), the three chambers (2, 3, 4) communicating with one another via pressure-equalizing elements (20, 21),
(a) in a first process step, the saline water (10) is passed into the inlet chamber (2) in a manner substantially free from overpressure and in so doing the return chamber (4) is emptied by the action of the pressure-equalizing elements (20, 21), and
(b) in a second process step, the external pressure is applied to the pressure medium of the compression chamber (3) and the concentrated water (12) obtained is led to the return chamber (4),
characterized in that the compression chamber (3) is formed by a pressure-tight vessel (30),
the inlet chamber (2) and the return chamber (4) are arranged inside the compression chamber (3) and
the three chambers (2, 3, 4) directly communicate with one another via pressure-equalizing elements (20, 21), so that the volume of the inlet chamber (2) changes in direct dependence, caused by displacement of the pressure-equalizing elements (20, 21), on the volume of the return chamber (4).

2. Apparatus for carrying out the process according to Claim 1, having a three-chamber arrangement (1) with an inlet chamber (2) for receiving saline water (10), a return chamber (4) for receiving concentrated water (11) and a compression chamber (3) capable of being pressurized by a pressure medium which can be supplied from outside, the three chambers (2, 3, 4) communicating with one another via pressure-equalizing elements (20, 21) in such a way that between them a hydraulic and/or pneumatic pressure equalization is possible without substantial mixing of their contents,
characterized in that the compression chamber (3) is formed by a pressure-tight vessel (30),
the inlet chamber (2) and the return chamber (4) are arranged inside the compression chamber (3), and
in that the volume of the inlet chamber (2) is changeable in direct dependence, caused by displacement of the pressure-equalizing elements (20, 21), on the volume of the return chamber (4).

3. Apparatus according to Claim 2, characterized in that the pressure-equalizing elements are designed wholly or partly as pressure membranes (20, 21) impermeable to water and the pressure medium.

4. Apparatus according to Claim 3, characterized in that the pressure-tight vessel has a means for the connection of a highpressure pump (40) serving to supply the pressure medium.

5. Apparatus according to the preceding claim, characterized in that the inlet chamber (2) and the return chamber (4) are each formed by a bladder-like pressure membrane (20, 21) acting at the same time as the pressure-equalizing element, said pressure membranes communicating pressure-tightly with the compression chamber (3).

6. Apparatus according to the preceding claim, characterized in that the pressure-equalizing elements are designed wholly or partly as pistons movable in a cylinder-like vessel of the three-chamber arrangement (1).

7. Apparatus according to the preceding claim, characterized in that at least one of the pistons is connected to a piston rod guided out of the cylinder-like vessel, the piston rod having a drive for moving the piston, preferably a linear drive.

## Revendications

1. Procédé de dessalement d'eau par osmose inverse, en particulier de dessalement d'eau de mer, selon lequel l'eau saline (10) pressurisée est introduite dans un module à membrane (5) grâce auquel on obtient de l'eau dessalée (11) ayant traversé le système à membrane du module à membrane (5) ainsi que de l'eau (12) concentrée sous pression n'ayant pas traversé le système de membrane, dans lequel la pressurisation de l'eau saline (10) a lieu par application d'une pression extérieure sur un fluide sous pression dont la pression est transmise à l'eau saline (10), dans lequel l'eau (12) concentrée et sous pression est recyclée dans le procédé et la pression extérieure est transmise au volume d'eau et au fluide sous pression, selon un procédé opérant de façon discontinue et comportant au moins deux étapes de procédé à l'aide d'un agencement à trois chambres (1) qui présente une chambre d'arrivée (2) pour la réception de l'eau saline (10), une chambre de compression (3) remplie d'un fluide sous pression pour l'application de la pression extérieure et une chambre de recyclage (4) pour la réception de l'eau concentrée (12) recyclée, les trois chambres (2, 3, 4) étant reliées l'une à l'autre par l'intermédiaire d'éléments de compensation de pression (20, 21),
(a) dans une première étape de procédé, l'eau saline (10) étant guidée en substance sans surpression dans la chambre d'arrivée (2) et la chambre de recyclage (4) étant en même temps vidée sous l'effet des éléments de compensation de pression (20, 21) et
(b) dans une seconde étape de procédé, la pression extérieure étant appliquée sur le fluide sous pression de la chambre de compression (3) et l'eau concentrée (12) obtenue étant guidée vers la chambre de recyclage (4),
caractérisé en ce que la chambre de compression (3) est formée par un réservoir (30) étanche à la pression,
en ce que la chambre d'arrivée (2) et la chambre de recyclage (4) sont disposées à l'intérieur de la chambre de compression (3) et
en ce que les trois chambres (2, 3, 4) sont directement reliées l'une à l'autre par l'intermédiaire des éléments de compensation de pression (20, 21) si bien que le volume de la chambre d'arrivée (2) varie en fonction directement du volume de la chambre de recyclage (4), cette dépendance étant opérée par le déplacement des éléments de compensation de pression (20, 21).

2. Dispositif d'exécution du procédé selon la revendication 1 comportant un agencement à trois chambres (1) qui présente une chambre d'arrivée (2) pour la réception de l'eau saline (10), une chambre de recyclage (4) pour la réception de l'eau concentrée (12) et une chambre de compression (3) qui peut être alimentée en pression par un fluide sous pression pouvant être admis de l'extérieur, les trois chambres (2, 3, 4) étant directement reliées l'une à l'autre par l'intermédiaire des éléments de compensation de pression (20, 21) si bien qu'une compensation de pression hydraulique et/ou pneumatique est possible sans mélange important de leurs contenus, caractérisé en ce que la chambre de compression (3) est formée par un réservoir (30) étanche à la pression, en ce que la chambre d'arrivée (2) et la chambre de recyclage (4) sont disposées à l'intérieur de la chambre de compression (3) et en ce que le volume de la chambre d'arrivée (2) peut varier en fonction directement du volume de la chambre de recyclage (4), cette dépendance étant opérée par le déplacement des éléments de compensation de pression (20, 21).

3. Dispositif selon la revendication 2, caractérisé en ce que les éléments de compensation de pression sont conçus en totalité ou en partie comme membranes à pression (20, 21) imperméables à l'eau et au fluide sous pression.

4. Dispositif selon la revendication 3, caractérisé en ce que le réservoir étanche à la pression présente un dispositif pour le branchement d'une pompe à haute pression (40) servant à l'apport du fluide sous pression.

5. Dispositif selon la revendication précédente, caractérisé en ce que la chambre d'arrivée (2) et la chambre de recyclage (4) sont formées respectivement par une membrane sous pression (20, 21) similaire à une bulle et opérant en même temps comme élément de compensation de pression et sont reliées à la chambre de compression (3), de manière étanche à la pression.

6. Dispositif selon la revendication précédente, caractérisé en ce que les éléments de compensation de pression sont conçus en totalité ou en partie en tant que pistons qui sont mobiles dans un réservoir similaire à un cylindre, de l'agencement à trois chambres (1).

7. Dispositif selon la revendication précédente, caractérisé en ce qu'au moins l'un des pistons est relié à une tige de piston sortie du réservoir similaire à un cylindre, la tige de piston présentant une commande pour le déplacement du piston, de préférence une commande linéaire.
